# EUROPEAN PATENT SPECIFICATION

(11) **EP 3 780 792 B1**
(45) Date of publication and mention of the grant of the patent: **26.07.2023**
(21) Application number: 19793015.9
(22) Date of filing: 28.04.2019
(51) Int. Cl.: H04W 68/02, H04W 88/08

(54) **SIGNAL TRANSMISSION METHOD, CENTRAL ACCESS POINT (AP) AND RADIO REMOTE UNIT (RRU)**
SIGNALÜBERTRAGUNGSVERFAHREN, ZENTRALER ZUGANGSPUNKT (AP) UND RADIO REMOTE UNIT (RRU)
PROCÉDÉ D'ÉMISSION DE SIGNAL, POINT D'ACCÈS CENTRAL (AP) ET UNITÉ RADIO DISTANTE (RRU)

(30) Priority: 28.04.2018 CN 201810400404
(43) Date of publication of application: 17.02.2021
(73) Proprietor: Huawei Technologies Co., Ltd., Longgang District Shenzhen Guangdong 518129 (CN)
(72) Inventor: PAN, Dongcheng, Shenzhen, Guangdong 518129 (CN); WEI, Hanyu, Shenzhen, Guangdong 518129 (CN); HU, Yinliang, Shenzhen, Guangdong 518129 (CN)
(74) Representative: Pfenning, Meinig & Partner mbB
(86) International application number: PCT/CN2019/084727
(87) International publication number: WO 2019/206320

(56) References cited:
- EP-A1- 1 827 036
- EP-A1- 2 658 138
- WO-A1-2013/048526
- WO-A1-2014/180339
- WO-A1-2017/088911
- CN-A- 102 625 248
- CN-A- 107 295 586
- US-A1- 2008 165 875
- US-A1- 2013 157 676
- US-A1- 2018 103 487
- LAN/MAN STANDARDS COMMITTEE OF THE IEEE COMPUTER SOCIETY: "Part 11: Wireless LAN Medium Access Control (MAC) and Physical Layer (PHY) Specifications", IEEE DRAFT; DRAFT P802.11REVMD_D1.0, IEEE-SA, PISCATAWAY, NJ USA , vol. 802.11md drafts; 802.11 drafts; 802.11m drafts, no. D1.0 4 February 2018 (2018-02-04), pages 1-4226, XP068137845, Retrieved from the Internet: URL:www.ieee802.org/11/private/Draft_Stand ards/11md/Draft P802.11REVmd_D1.0.pdf [retrieved on 2018-02-04]

## Description

### TECHNICAL FIELD

This application relates to the communications field, and more specifically, to a signal transmission method, a central AP and an RRU.

### BACKGROUND

A current wireless network access point (Access point, AP) product mainly includes two manners: a standalone AP, and a combination of a central AP and a remote radio unit (Remote Radio Unit, RRU). The central AP is a device in which management information (for example, user management) in the standalone AP is centralized. The RRU is responsible for a wireless transmission function based on 802.11.

Compared with the standalone AP, for an internal hardware and a chip architecture of the RRU, a control logical function is transferred to the central AP for unified management, and medium access control (Medium Access Control, MAC) layer functions and physical (Physical, PHY) layer functions need to be performed by the RRU. In this way, a central processing unit (central processing unit, CPU) inside the RRU needs to participate in an entire process of performing the MAC layer functions and the PHY layer functions in the RRU, thereby causing larger power consumption and overheads of the RRU.

Document WO 2017/088911 A1 discloses a method for switching data signals transmitted over a transport network; the method comprising: receiving a plurality of input data signals of a first signal type, wherein the plurality of data signals of the first signal type comprises data signals exchanged between a Radio Equipment, RE, and a Radio Equipment Controller, REC; aggregating the plurality of input data signals into an aggregated first data signal; receiving a second data signal of a second signal type different to the first signal type; multiplexing the aggregated first data signal with the second data signal to form a combined data signal; and forwarding the combined data signal to the transport network; wherein multiplexing the first data signal with the second data signal comprises, for a frame of the combined data signal: allocating the first data signal to a portion of the frame reserved for the first data signal; and allocating the second data signal to a remaining portion of the frame.

Document EP 2 658 138 A1 discloses a centralized baseband processing unit CBPU, comprising a switching module and at least one base band unit BBU and further comprising a resource mapping module, wherein: he resource mapping module is configured to perform resource block demapping for uplink frequency domain baseband signals obtained through Fast Fourier Transform FFT, and demultiplex signals of each user from corresponding subcarriers; the switching module is configured to transmit the signals of each user to the corresponding BBU; and the BBU is configured to process the received user signals.

Document WO 2014/180339 A1 discloses a radio remote unit, a base band unit, and a distributed base station. The radio remote unit performs data interaction with the base band unit based on a packet switching technology. The radio remote unit and the base band unit form a distributed base station. The radio remote unit comprises: an encapsulation unit, used to encapsulate, based on the packet switching technology, first data to be sent to the base band unit, to obtain a first data packet; a sending unit, used to send the first data packet to a target base band unit based on the packet switching technology, so that the target base band unit de-encapsulates the first data packet to obtain the first data; a receiving unit, used to receive a second data packet which is encapsulated and sent by the base band unit based on the packet switching technology; and a de-encapsulation unit, used to de-encapsulate the second data packet, to obtain the second data.

Document LAN/MAN STANDARDS COMMITTEE OF THE IEEE COMPUTER SOCIETY, "Part 11: Wireless LAN Medium Access Control (MAC) and Physical Layer (PHY) Specifications", vol. 802.11md drafts; 802.11 drafts; 802.11m drafts, no. D1.0, (20180204), pages 1 - 4226, IEEE DRAFT; DRAFT P802.11REVMD_D1.0, IEEE-SA, PISCATAWAY, NJ USA, URL: www.ieee802.org/11/private/Draft_Standards/11md/Draft P802.11REVmd_D1.0.pdf, (20180204), XP068137845 discloses a standard for wireless communications.

### SUMMARY

The above problems are solved by the subject-matter according to the independent claims 1, 7 and 8. Further embodiments are disclosed in the dependent claims. This application provides a signal transmission method, so that power consumption and costs of an RRU can be reduced.

According to a first aspect, a signal transmission method is provided. The method includes: receiving, by a remote radio unit RRU, a first packet sent by a central access point AP, where the first packet includes a first field, and the first field is used to indicate a physical layer configuration status parameter for packet transmission; configuring, by the RRU, a packet transmission state based on the first field; and sending, by the RRU, a second packet to a station based on the packet transmission state, where the second packet includes data.

The RRU receives the first packet sent by the central AP, where the first field of the first packet is used to indicate the physical layer configuration status parameter for packet transmission. The RRU configures the packet transmission state based on the first field, and sends, to the station based on the packet transmission state, the second packet that includes the data. In this way, transferring of functions of a MAC layer to the central AP is implemented in this embodiment of this application, thereby reducing costs and power consumption of the RRU.

In some possible implementations, the physical layer configuration status parameter includes at least one of the following configuration status subparameters: a format for indicating an air interface packet, whether the air interface packet is a sounding frame, a transmission rate of the air interface packet, a modulation format of the air interface packet, a byte length of the air interface packet, an initialization value of a scrambler, a transmission energy level for transmission of the air interface packet, a preamble type of the air interface packet, a channel width for transmission of the air interface packet, channel offset for transmission of the air interface packet, a guard interval for transmission of the air interface packet, a quantity of extended spatial streams of the air interface packet, a quantity of transmission chains of the air interface packet, a channel matrix of the air interface packet, and an expansion matrix type of the air interface packet.

The RRU receives the first packet that is sent by the central AP and that includes a field used to indicate the physical layer configuration status parameter for packet transmission, because the physical layer configuration status parameter is generated at the MAC layer, that is, at least the MAC layer module and a function module of a layer below the MAC layer are moved to the central AP.

In some possible implementations, the physical layer configuration status parameter is a primitive TXVECTOR parameter.

In some possible implementations, the first packet further includes a second field, where the second field is used to carry the data.

In this application, the first field and the second field are carried in a same packet. Compared with a case in which data and a physical layer configuration status parameter are sent separately in a conventional solution, in this embodiment of this application, information exchange between the MAC layer and an application layer can be reduced, thereby reducing a latency of data transmission.

In some possible implementations, the first packet further includes a third field, the third field is used to carry the packet end identifier, and the method further includes: sending, by the RRU, end indication information to the central AP based on the packet end identifier.

The third field is used to carry the packet end identifier. In this case, a PHY layer module reads the third field from a storage module, and sends the end indication information to the central AP, so that the end indication information is automatically triggered to complete information exchange.

In the claimed invention the first field carries a first index value, and the configuring, by the RRU, a packet transmission state based on the first field includes: determining, by the RRU based on the first index value and a mapping relationship, a first configuration status subparameter corresponding to the first index value, where the mapping relationship is a mapping relationship between at least one index value and at least one configuration status subparameter; and configuring, by the RRU, the packet transmission state based on the first configuration status subparameter.

In this way, a first subfield is carried in the first packet, and a corresponding first parameter is determined based on an index value indicated by using the first subfield, avoiding a case in which the first parameter is directly carried in a packet, and reducing bandwidth occupation.

In some possible implementations, the index value is a medium access control MAC index value, and the configuration status subparameter is a channel matrix parameter.

In the claimed invention, before the determining, a first configuration status subparameter corresponding to the first index value, the method further includes: receiving, by the RRU, a sounding packet, where the sounding packet is used to measure air interface channel quality; sending, by the RRU, the sounding packet to the station; and receiving, by the RRU, a response packet of the sounding packet, where the response packet includes the mapping relationship.

The central AP may send the sounding packet periodically or when a spatial channel needs to be measured again, so that the RRU can update the mapping relationship stored in the storage module.

In some possible implementations, the RRU includes the storage module and a physical PHY layer module, and the method further includes: buffering, by the storage module, the first packet; and obtaining, by the PHY layer module, the first packet from the storage module.

In this way, the RRU may store the received sounding packet in the storage module, and the PHY layer module may obtain the sounding packet from the storage module if necessary.

In some possible implementations, the first packet further includes a second field and a third field, where the second field is used to carry the data, and the third field is used to carry the packet end identifier. The first field, the second field and the third field are sequentially arranged in the first packet, and the first field, the second field, and the third field that are in the PHY layer module are sequentially obtained from the storage module.

In this way, a case in which a meaning of each field is indicated by using identification information is avoided, so that complex exchange within the PHY layer module is further reduced.

In some possible implementations, the first field further includes a first subfield, the first subfield is used to indicate an address of each configuration status subparameter of the physical layer configuration status parameter in a register in the PHY layer module, and the configuring, by the RRU, a packet transmission state based on the first field includes: storing, by the RRU, each configuration status subparameter of the physical layer configuration status parameter in a corresponding register in the PHY layer module based on the first subfield.

The PHY layer module may store each type of configuration status subparameter in the corresponding register based on the first subfield, to complete configuration of the packet transmission state and enable an initiating state to be in an optimal state, thereby improving quality of packet transmission.

In some possible implementations, the first field further includes a second subfield, the second subfield indicates a location of a subfield that is in the first field and that is used to indicate a configuration status subparameter of the physical layer configuration status parameter, and the obtaining, by the PHY layer module, the first packet from the storage module includes: obtaining, by the PHY layer module, the configuration status subparameter of the physical layer configuration status parameter from the storage module based on the second subfield.

The second subfield can indicate a location of a subfield carrying each configuration status subparameter in the first field. Especially, when the first field indicates a plurality of configuration status subparameters, the PHY layer module needs to determine, based on the second subfield, the location of the subfield indicating each configuration status subparameter, and further determine to store the configuration status subparameter in the corresponding register.

In some possible implementations, the first field includes a third subfield, where the third subfield is used to indicate that subfields of at least two configuration status subparameters in the configuration status parameter are arranged in a preset order, and the obtaining, by the PHY layer module, the first field in the first packet from the storage module includes: obtaining, by the PHY layer module, the at least two configuration status subparameters from the storage module in the preset order of the subfield.

When there are at least two configuration status subparameters, the first packet may not include the second subfield, and the third subfield is used to indicate that the subfields carrying the at least two configuration status subparameters may be arranged in a preset order, so that the PHY layer module can sequentially read each subfield, and can learn a meaning of each field.

In some possible implementations, the first packet further includes a packet header, and the packet header indicates a MAC address of the RRU.

The central AP can implement packet forwarding and routing based on the packet header, thereby improving efficiency of packet transmission.

According to a second aspect, a signal transmission method is provided. The method includes: generating, by a central AP, a packet, where the packet includes a first field, and the first field is used to indicate a physical layer configuration status parameter for packet transmission; and sending, by the central AP, the packet to a remote radio unit RRU.

The central AP generates a first packet, where a first field of the first packet is used to indicate a physical layer configuration status parameter for packet transmission. The central AP sends the first packet to the RRU, so that the RRU configures a packet transmission state based on the first field of the first packet, and sends, to a station based on the packet transmission state, a second packet that includes data. In this way, transferring of functions of a MAC layer to the central AP is implemented in this embodiment of this application, thereby reducing costs and power consumption of the RRU.

In some possible implementations, the physical layer configuration status parameter includes at least one of the following configuration status subparameters: a format for indicating an air interface packet, whether the air interface packet is a sounding frame, a transmission rate of the air interface packet, a modulation format of the air interface packet, a byte length of the air interface packet, an initialization value of a scrambler, a transmission energy level for transmission of the air interface packet, a preamble type of the air interface packet, a channel width for transmission of the air interface packet, channel offset for transmission of the air interface packet, a guard interval for transmission of the air interface packet, a quantity of extended spatial streams of the air interface packet, a quantity of transmission chains of the air interface packet, a channel matrix of the air interface packet, and an expansion matrix type of the air interface packet.

In some possible implementations, the packet further includes a second field, where the second field is used to carry the data.

In some possible implementations, the packet further includes a third field, where the third field is used to carry the packet end identifier, and the method further includes: receiving, by the central AP, end indication information.

In some possible implementations, the first field, the second field, and the third field that are in the packet are sequentially arranged.

In the claimed invention, the first field carries a first index value, and the first index value corresponds to a first configuration status subparameter.

In some possible implementations, the first index value is a medium access control MAC index value, and the first configuration status subparameter is a channel matrix parameter.

In the claimed invention, the method further includes: sending, by the central AP, a sounding packet to the RRU, where the sounding packet is used to measure air interface channel quality; and receiving, by the central AP, a response packet of the sounding packet sent by the RRU, where the response packet includes a mapping relationship between at least one index value and at least one configuration status subparameter.

In some possible implementations, the first field includes a first subfield, where the first subfield is used to indicate an address of each configuration status subparameter of the physical layer configuration status parameter in a register in a PHY layer module of the RRU.

In some possible implementations, the first field includes a second subfield, where the second subfield indicates a location of a subfield that is in the first field and that is used to indicate at least one configuration status subparameter of the physical layer configuration status parameter.

In some possible implementations, the central AP includes a medium access control MAC layer module, and the generating, by the central AP, a first packet includes: generating, by the MAC layer module, the first packet.

In some possible implementations, the packet further includes a packet header, and the packet header indicates a MAC address of the RRU.

According to a third aspect, a signal transmission apparatus is provided. The apparatus may be an RRU, or may be a chip in the RRU. The apparatus has functions of implementing various embodiments in the first aspect. The functions may be implemented by hardware, or implemented by hardware executing corresponding software. The hardware or the software includes one or more units corresponding to the functions.

In a possible design, when the apparatus is the RRU, the RRU includes a processing module and a transceiver module. The processing module may be, for example, a processor. The transceiver module may be, for example, a transceiver. The transceiver includes a radio frequency circuit.

Optionally, the RRU further includes a storage unit, and the storage unit may be, for example, a memory. When the RRU includes the storage unit, the storage unit is configured to store computer executable instructions, the processing module is connected to the storage unit, and the processing module executes the computer executable instructions stored in the storage unit, to enable a third device to perform the method according to any one of the implementations in the first aspect.

In another possible design, when the apparatus is the chip in the RRU, the chip includes a processing module and a transceiver module. The processing module may be, for example, a processor, and the transceiver module may be, for example, an input/output interface, a pin or a circuit on the chip. The processing module can execute computer executable instructions stored in the storage unit, to enable the chip in the RRU to perform the method according to any one of the implementations in the first aspect.

Optionally, the storage unit may be a storage unit in the chip, such as a register or a buffer, or the storage unit may be a storage unit in the third device but outside the chip, such as a read-only memory (read-only memory, ROM), another type of static storage device capable of storing static information and instructions, or a random access

Any one of the processors mentioned above may be a general-purpose central processing unit (CPU), a microprocessor, an application-specific integrated circuit (application-specific integrated circuit, ASIC), or one or more integrated circuits configured to control execution of a program of the signal transmission method according to the first aspect.

According to a fourth aspect, a signal transmission apparatus is provided in this application. The apparatus may be a central AP, or may be a chip in the central AP. The apparatus has functions of implementing various embodiments in the second aspect. The functions may be implemented by hardware, or implemented by hardware executing corresponding software. The hardware or the software includes one or more units corresponding to the functions.

In a possible design, when the apparatus is the central AP, the central AP includes a processing module and a transceiver module. The processing module may be, for example, a processor. The transceiver module may be, for example, a transceiver. The transceiver includes a radio frequency circuit. Optionally, the central AP further includes a storage unit, and the storage unit may be, for example, a memory. When the central AP includes the storage unit, the storage unit is configured to store computer executable instructions, the processing module is connected to the storage unit, and the processing module executes the computer executable instructions stored in the storage unit, to enable the central AP to perform the signal transmission method according to any one of the implementations in the second aspect.

In another possible design, when the apparatus is the chip in the central AP, the chip includes a processing module and a transceiver module. The processing module may be, for example, a processor, and the transceiver module may be, for example, an input/output interface, a pin or a circuit on the chip. The processing module can execute computer executable instructions stored in the storage unit, to enable the chip in the central AP to perform the method according to any one of the implementations in the second aspect. Optionally, the storage unit may be a storage unit in the chip, such as a register or a buffer, or the storage unit may be a storage unit in the central AP but outside the chip, such as a ROM, another type of static storage device capable of storing static information and instructions, or a RAM.

Any one of the processors mentioned above may be a CPU, a microprocessor, an ASIC, or one or more integrated circuits configured to control execution of a program of the signal transmission method according to the second aspect.

According to a fifth aspect, which is not part of the claimed invention, a communications system is provided. The communications system includes the apparatus according to the third aspect and the apparatus according to the fourth aspect.

According to a sixth aspect, which is not part of the claimed invention, a communications system is provided. The communications system includes the apparatus according to the third aspect, the apparatus according to the fourth aspect and a station.

According to a seventh aspect, which is not part of the claimed invention, a computer storage medium is provided, the computer storage medium stores program code, and the program code is used to indicate an instruction of executing the method according to either of the first aspect and the second aspect or any possible implementation thereof.

In an eighth aspect, which is not part of the claimed invention, a processor is provided. The processor is coupled to a memory, and is configured to perform the method according to either of the first aspect and the second aspect or any possible implementation thereof.

According to a ninth aspect, which is not part of the claimed invention, a computer program product including an instruction is provided. When the computer program product is run on a computer, the computer is enabled to perform the method according to either of the first aspect and the second aspect or any possible implementation thereof.

Based on the foregoing solutions, the RRU receives the first packet sent by the central AP, where the first field of the first packet is used to indicate the physical layer configuration status parameter for packet transmission. The RRU configures the packet transmission state based on the first field, and sends, to the station based on the packet transmission state, the second packet that includes the data. In this way, transferring of functions of a MAC layer to the central AP is implemented in the embodiments of this application, thereby reducing costs and power consumption of the RRU.

### BRIEF DESCRIPTION OF DRAWINGS

FIG. 1 is a schematic diagram of a communications system in a conventional solution;
FIG. 2 is a schematic structural diagram of internal connection of an RRU in a conventional scheme;
FIG. 3 is a schematic diagram of an application scenario according to an embodiment of this application;
FIG. 4 is a schematic architectural diagram of a communications system in a conventional solution;
FIG. 5 is a schematic flowchart of a signal transmission method according to an embodiment of this application;
FIG. 6 is a schematic diagram of a signal transmission method according to a specific embodiment of this application;
FIG. 7 is a schematic diagram of a packet format according to an embodiment of this application;
FIG. 8 is a schematic diagram of a signal transmission method according to a specific embodiment of this application;
FIG. 9 is a schematic flowchart of a signal transmission method according to another embodiment of this application;
FIG. 10 is a schematic block diagram of an RRU according to an embodiment of this application;
FIG. 11 is a schematic block diagram of a central AP according to another embodiment of this application;
FIG. 12 is a schematic block diagram of a communications system according to an embodiment of this application;
FIG. 13 is a schematic block diagram of a communications system according to another embodiment of this application; and
FIG. 14 is a schematic structural diagram of a signal transmission apparatus according to an embodiment of this application.

### DESCRIPTION OF EMBODIMENTS

The following describes technical solutions of this application with reference to the accompanying drawings.

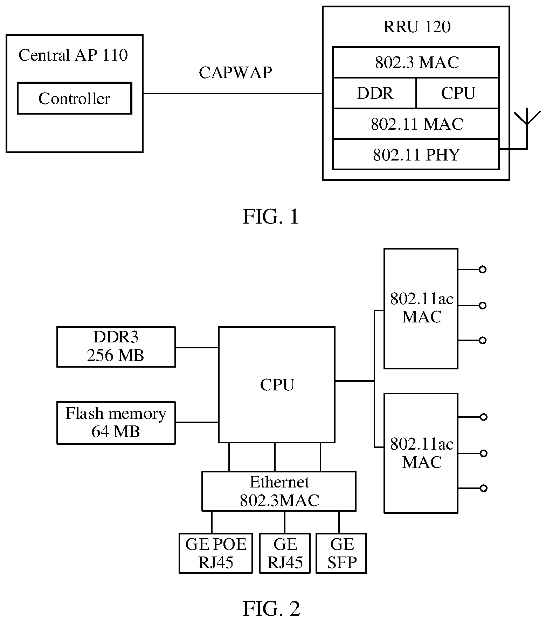

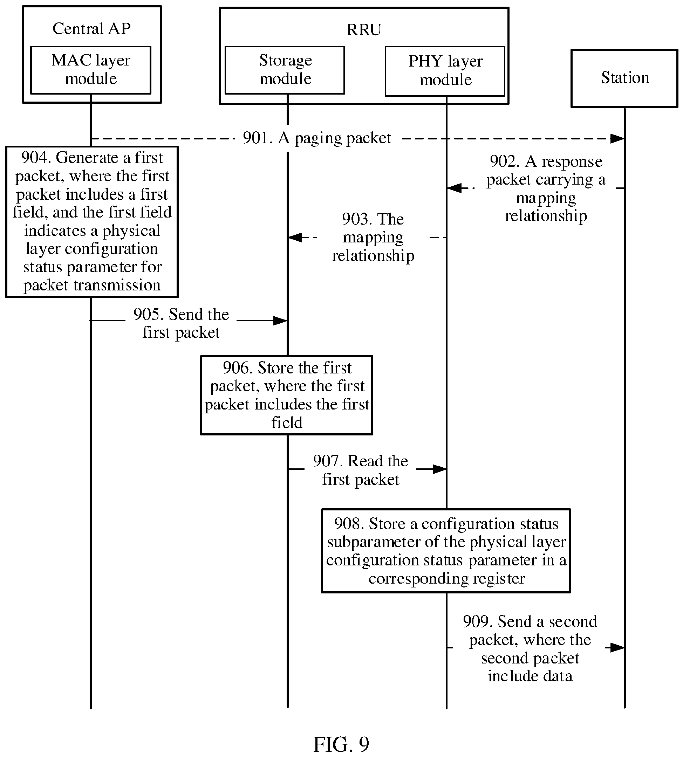

The technical solutions of embodiments of this application may be applied to various communications systems, such as a wireless local area network (Wireless Fidelity, Wi-Fi) system, a wireless local area network (Wireless Local Area Network, WLAN) system, a global system for mobile communications (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, a future 5th generation (5th Generation, 5G) system, or a new radio (New Radio, NR) system. The subject-matter, i.a. named "example(s)"/"aspect(s)"/"embodiment(s)"/"invention(s)" in the description of figures 1-8 and 10-14 is not according to the invention as defined in the claims. This subject matter serves to highlight and explain certain claimed features and is present for illustration purposes only. The example(s)/aspect(s)/embodiment(s)/invention(s) in the description of figure 9 are according to the invention as defined in the claims.

A station (station, STA) in the embodiments of this application may be a terminal device, user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in the embodiments of this application. For convenience of description, a station is used as an example for description in the following embodiments.

An AP in the embodiments of this application may be a device for communicating with a station. The AP may be a base transceiver station (Base Transceiver Station, BTS) in a global system for mobile communications (Global System for Mobile communication, GSM) or a code division multiple access (Code Division Multiple Access, CDMA) system, or may be a NodeB (NodeB, NB) in a wideband code division multiple access (Wideband Code Division Multiple Access, WCDMA) system, or may be an evolved NodeB (evolved NodeB, eNB or eNodeB) in an LTE system, or may be a radio controller in a cloud radio access network (Cloud Radio Access Network, CRAN) scenario. Alternatively, the AP may be a relay station, an access point, a vehicle-mounted device, a wearable device, and a network device in a future 5G network, a network device in a future evolved PLMN, a personal basic service set control point (Personal basic service set Control Point, PCP), or the like. This is not limited in the embodiments of this application. For convenience of description, an AP is used as an example for description in the following embodiments.

FIG. 1 is a schematic diagram of a communications system in a conventional solution. As shown in FIG. 1, the communications system includes a central AP 110 and an RRU 120. The central AP 110 includes a controller, configured to control user management of the RRU 120 and data forwarding of the RRU 120. The RRU 120 internally includes a module for implementing functions of the 802.3 MAC layer (referred to as "MAC layer module" in this embodiment of this application), a double data rate (Double Data Rate, DDR) synchronous dynamic random access memory, a CPU, a module for implementing functions of the 802.11 MAC layer, and a module for implementing functions of the 802.11 PHY layer (referred to as "PHY layer module" in this embodiment of this application).

It should be noted that functions of the MAC layer mainly include controlling and connecting physical media at the physical layer. Functions of the PHY layer are mainly used for providing mechanical, electronic, functional and normative features for creating, maintaining, and undeployment of a physical link required for data transmission.

More specifically, FIG. 2 shows a structure of internal connection of an RRU in a conventional solution. The RRU 120 includes a double data rate (double data rate, DDR) memory 3, a flash memory (NOR Flash), wired interfaces (GE POE RJ 45, GE RJ45, and GE SFP), an 802.3 MAC layer module, an 802.11 MAC layer module, and the like. A hardware architecture within the RRU 120 differs from function modules of a standalone AP in that a control logic function within the RRU 120 is transferred to the central AP 110, and the central AP 110 communicates with the RRU 120 by using a control and provisioning of wireless access points (Control And Provisioning of Wireless Access Points, CAPWAP) protocol, that is, the central AP 110 communicates with the RRU 120 by using a wired network. For a user, the RRU is still an integrated AP that can perform a wireless fidelity (Wireless Fidelity, Wi-Fi) access function, process a Wi-Fi 802.11 protocol and generate an 802.3 packet.

In addition, in the 802.11 standard, transmission of each packet requires exchanging of 6 types of primitives between the MAC layer and the PHY layer. The primitives include a parameter TXVECTOR. For example, a primitive PHY-TSSTART.request includes the TXVECTOR. Because a data amount of channel matrix parameters included in the parameter TXVECTOR has occupied thousands of bytes of resources in a case of 20 MHz band, 4*4 MIMO and 8-bit precision, a quantity of bytes included in the parameter TXVECTOR may grow exponentially in a case of 160 MHz band, and 8*8 MIMO in a subsequent standard. In the conventional solution, a data interface and a control management interface between the MAC layer and the PHY layer in the 802.11 standard separately implement frequent and large-scale information exchange by using independent local buses.

In the conventional solution, the CPU inside the RRU needs to participate in an entire process of performing MAC layer functions and PHY layer functions inside the RRU, causing larger power consumption and overheads of the RRU.

The embodiments of this application are mainly applied to a distributed Wi-Fi product, for example, applied to a scenario in which large-scale Wi-Fi is required, such as an enterprise, a hospital, a school, or a hotel. The complexity of an RRU is reduced, so that power consumption and costs of the RRU are reduced.

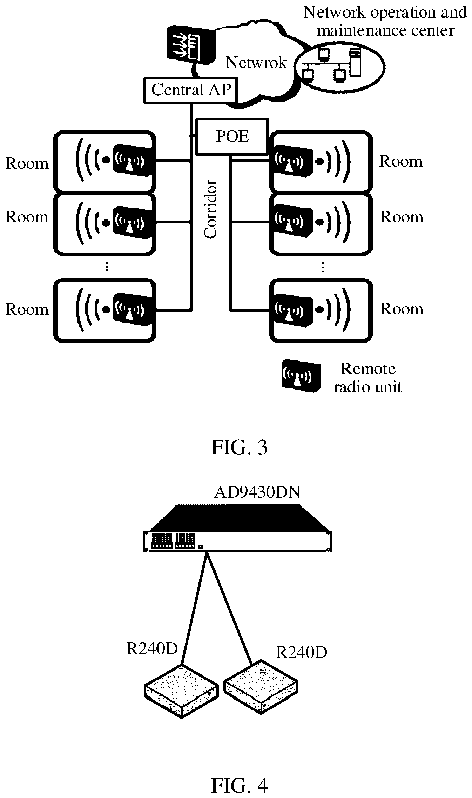

For example, FIG. 3 is a schematic diagram of an application scenario according to an embodiment of this application. As shown in FIG. 3, an RRU is placed in each room of a hotel. A power over Ethernet (Power Over Ethernet, POE) switch is connected to a central AP, the central AP performs user management, and the RRUs serve as Wi-Fi access terminals. As shown in FIG. 4, a model of a central AP may be AD9430DN, and a model of an RRU may be R240D.

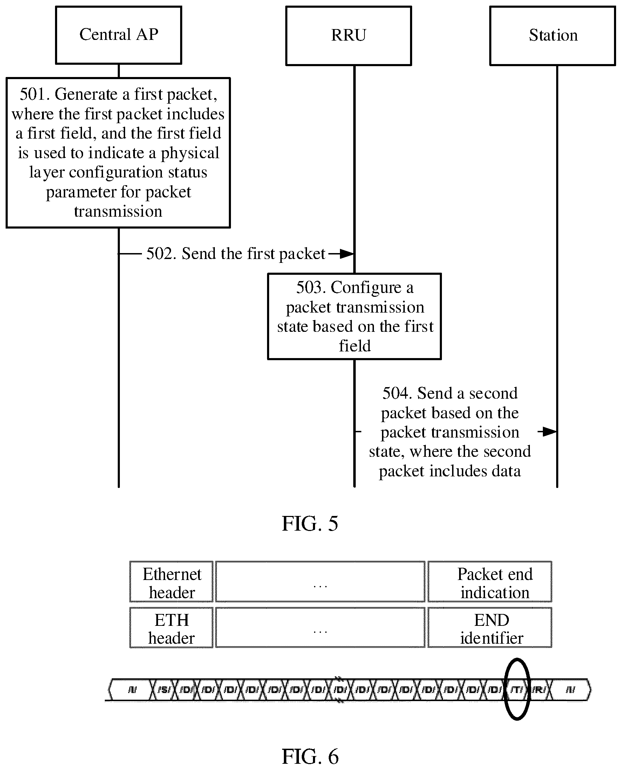

FIG. 5 is a schematic flowchart of a signal transmission method according to an embodiment of this application.

501. A central AP generates a first packet, where the first packet includes a first field, and the first field is used to indicate a physical layer configuration status parameter for packet transmission.

Specifically, the central AP can generate the first packet including the first field, where the first field may indicate the physical layer configuration status parameter for packet transmission. To be specific, the central AP can perform MAC layer functions to generate a packet including a field that can indicate the physical layer configuration status parameter. In other words, the central AP includes a MAC layer module.

It should be noted that the MAC layer module may be a module used to implement functions of the 802.11 MAC layer.

Optionally, the first field may directly carry the physical layer configuration status parameter for the packet transmission, or may determine the physical layer configuration status parameter based on the first field, which is not limited in this application.

For example, the first field may carry identification information or index information, and a configuration status parameter may be determined based on the identification information or the index information.

Optionally, the physical layer configuration status parameter may include at least one configuration status subparameter. For example, the physical layer configuration status parameter includes at least one of the following configuration status subparameters: a format (FORMAT) for indicating an air interface packet, whether the air interface packet is a sounding frame, a transmission rate (DATARATE) of the air interface packet, a modulation format of the air interface packet, a byte length (LENGTH) of the air interface packet, an initialization value (SERVICE) of a scrambler, a transmission energy level (TXPWR_LEVEL) for transmission of the air interface packet, a preamble type (PREAMBLE_TYPE) of the air interface packet, a channel width (CH_BANDWIDTH) for transmission of the air interface packet, channel offset (CH_OFFSET) for transmission of the air interface packet, a guard interval (GI_TYPE) for transmission of the air interface packet, a quantity of extended spatial streams (NUM_EXTEN_SS) of the air interface packet, a quantity of transmission chains (N_TX) of the air interface packet, a channel matrix (EXPANSION_MAT) and a channel matrix type (EXPANSION_MAT_TYPE) of the air interface packet, and an expansion matrix type (EXPANSION_MAT_TYPE) of the air interface packet.

Specifically, a configuration status subparameter for indicating the FORMAT can be used to determine a format of a physical layer protocol data unit (PPDU), and the FORMAT may include three physical layer protocol data unit (PHY Protocol Data Unit, PPDU) types: NON_HT, HT_MF and HT_GF.

The modulation format of the air interface packet may include two schemes: a modulation and coding scheme (Modulation and Coding Scheme, MCS) and a modulation (MODULATION) scheme. Specifically, when the FORMAT is NON_HT, the MODULATION scheme is used. When the FORMAT is HT_MF or HT_GF, the MCS is used. An order of the MCS may be BPSK, QPSK, 16-QAM, 64-QAM, and 128-QAM.

The configuration status subparameter used to indicate whether the air interface packet is a sounding frame is used to enable a station to distinguish the air interface packet from a sounding packet.

The channel width for transmission of the air interface packet is a bandwidth occupied for packet transmission, and the bandwidth may be 20 MHz, 40 MHz, 80 MHz, or 160 MHz.

The channel offset for transmission of the air interface packet may indicate a specific occupied part of a channel for packet transmission, for example, an upper half part 20 MHz or a lower half part 20 MHz of the 40 MHz.

The guard interval may include a long interval and a short interval. The long interval may be 800 ns, and the short interval may be 400 ns.

The quantity of extended spatial streams may refer to a quantity of data streams.

The quantity of transmission chains may be a quantity of antennas.

The expansion matrix may be a channel matrix, namely, a matrix of air interface channel parameters.

It should be understood that content included in the physical layer configuration status parameter is the same as that included in a physical layer configuration status parameter used to configure a transmission state of an air interface packet in a conventional solution, and configuration status subparameters may be added or removed as a protocol changes. This is not limited in this application.

Optionally, the physical layer configuration status parameter may be a primitive (TXVECTOR) parameter.

502. The central AP sends the first packet. Correspondingly, an RRU receives the first packet sent by the central AP.

Specifically, the RRU receives the first packet that is sent by the central AP and that includes a field used to indicate the physical layer configuration status parameter for packet transmission, because the physical layer configuration status parameter is generated at the MAC layer, that is, at least the MAC layer module and a function module of a layer below the MAC layer are moved to the central AP.

It should be noted that communication between the central AP and the RRU is wired network communication.

Optionally, the RRU may internally include a storage module and a PHY layer module. After the RRU receives the first packet, the storage module in the RRU buffers the first packet, and the PHY layer module reads the first packet from the storage module.

It should be noted that the PHY layer module in this embodiment of this application can be used to perform functions of the 802.11 PHY layer, unless otherwise specified.

503. The RRU configures a packet transmission state based on the first field.

Specifically, the packet transmission state may be an initiating state for packet transmission, or a ready state for packet transmission. To be specific, the RRU configures the initiating state based on the configuration status parameter indicated by using the first field, to prepare for data transmission. In other words, the configuring the packet transmission state is that the RRU is performing PHY layer functions.

Optionally, the first packet further includes a second field, where the second field is used to carry data. In other words, in this application, the first field and the second field are carried in a same packet. Compared with a case in which data and a physical layer configuration status parameter are sent by using different packets, in this embodiment of this application, information exchange between the MAC layer and the PHY layer can be reduced, thereby reducing a latency of data transmission.

Optionally, if the RRU includes a storage module, the RRU may store the second field in the storage module, and a PHY layer module obtains the data in the second field from the storage module.

Optionally, the PHY layer module reads the data in the second field from the storage module. The reading may be performed directly after the first field is read, or may be performed when it is detected that an air interface channel is idle.

Optionally, the first packet further includes a third field, and the third field is used to carry a packet end identifier. In this case, the RRU sends end indication information to the central AP, so that the end indication information is automatically triggered to complete information exchange. Correspondingly, the central AP receives the end indication information.

Optionally, if the RRU includes a storage module and a PHY layer module, the storage module first stores the third field, and the PHY layer module reads the third field from the storage module.

Specifically, the third field may carry an end identifier (END code). After the PHY layer module reads the END code, it may be determined that transmission of the data by the central AP ends, and the PHY layer module sends the end indication information to the central AP to notify the central AP.

For example, as shown in FIG. 6, it is assumed that 8b/10b encoding is used when Ethernet is used to transmit data, and each packet ends with a special code, namely, /T/code (K29.5), indicating that the packet ends. When the PHY layer module reads the /T/code, the PHY layer module sends the end indication information to the central AP.

Optionally, a packet format of the first packet may be that the first field, the second field, and the third field are sequentially arranged, and the PHY layer module may sequentially obtain the first field, the second field, and the third field from the storage module. In this way, a case in which a meaning of each field is indicated by using identification information is avoided, so that complex exchange within the PHY layer module is further reduced.

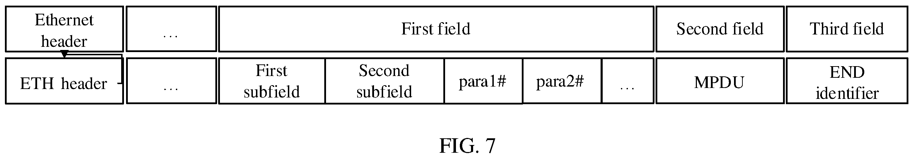

For example, the format of the first packet may be a sequential format of a first field, a second field, and a third field (as shown in FIG. 7), or may be a sequential format of a third field, a second field, and a first field. This is not limited in this application. However, the PHY layer module reads fields from the storage module in a sequential order of the first field, the second field, and the third field.

Optionally, the first packet may further include a packet header, and the packet header is used to indicate a MAC address of the RRU. In other words, the central AP determines packet forwarding and routing based on the packet header.

Specifically, the central AP and the RRU may be directly connected to each other, or may be connected by using one or more switches, and the packet header of the first packet may be used to indicate a routing path from the central AP to the MAC layer module in the RRU. After receiving the first packet sent by the central AP, the RRU strips the packet header and stores content of the packet in the storage module.

It should be noted that the MAC address herein may be an address of an 802.3 MAC layer module in the RRU. If the RRU further includes some 802.11 MAC layer modules, the MAC address of the RRU in the packet header may alternatively be an address of an 802.3 MAC layer module in the RRU. This is not limited in this application.

It should be understood that the packet header may also be referred to as an "Ethernet (Ethernet, ETH) header". For example, as shown in FIG. 7, the packet header is an "ETH header".

Optionally, the first field may further include a first subfield, and the first subfield is used to indicate an address of each configuration status subparameter of the configuration status parameter in a register in a PHY layer module. The PHY layer module stores each configuration status subparameter in a corresponding register based on the first subfield.

Specifically, the PHY layer module may include at least one register, and each register may be configured to store a type of configuration status subparameter. The PHY layer module may store each type of configuration status subparameter in the corresponding register based on the first subfield, to complete configuration of the packet transmission state.

For example, the configuration status parameter indicated by using the first subfield includes two types of configuration status parameters (FORMAT and MODULATION). The PHY layer module includes a register 1 and a register 2, where the register 1 is configured to store FORMAT, and the register 2 is used to store MODULATION. The PHY layer module needs to store FORMAT in the register 1 and MODULATION in the register 2 based on the first subfield, so that the initiating state is in an optimal state, thereby improving quality of packet transmission.

Optionally, a plurality of configuration status subparameters in the physical layer configuration status parameter may be sequentially arranged. The first subfield may be used to indicate a base address of the plurality of configuration status subparameters in a register of the PHY layer module, subsequent register addresses are arranged in a preset order, and the PHY layer module stores the plurality of configuration status subparameters in a corresponding register in the preset order.

For example, the first subfield is "TXV addr".

Optionally, the first field further includes a second subfield, and the second subfield is further used to indicate a location, in the first field, of a subfield used to carry at least one configuration status subparameter.

Specifically, the first field further includes at least one subfield used to carry configuration status subparameters (for example, as shown in FIG. 7, para#1, para#2, para#3, ...), and a second subfield, where the second subfield can indicate a location, in the first field, of a subfield used to carry each configuration status subparameter. Especially, when there are a plurality of configuration status subparameters in the first field, the PHY layer needs to determine, based on the second subfield, the location of the subfield indicating each configuration status subparameter, and further determine to store the configuration status subparameter in a corresponding register.

For example, as shown in FIG. 7, the second subfield is a para flag bit, where the para flag bit is used to indicate a location of each configuration status subparameter, and a value of the para flag bit is used to indicate whether the configuration status subparameter is valid. The subfield indicating the location of each configuration status subparameter occupies at least one bit. If the at least one bit is valid, each configuration status subparameter is carried in a corresponding subfield. If the at least one bit is invalid, a subfield that carries a configuration status subparameter indicated by using the second subfield does not exist in the first field.

For example, the second subfield is 111...11...0, and the underlined "1" indicates that the corresponding para5# is valid; that is, a corresponding configuration status subparameter is carried in para5#. For example, the configuration status subparameter is the MCS.

It should be understood that the at least one bit is valid may be that a value of the at least one bit is "1", and the at least one bit is invalid may be that all values of the at least one bit are "0".

Optionally, when there are at least two configuration status subparameters, subfields carrying the at least two configuration status subparameters may be arranged in a preset order by default by both sides in communication. In this way, the PHY layer module can sequentially read each subfield, and can learn a meaning of each field.

Optionally, that each of the at least two configuration status subparameters is arranged in a preset order may be alternatively indicated by using a subfield, that is, the second subfield is not needed.

Optionally, if the physical layer configuration status parameter is indicated by using the first field indirectly, for example, a configuration status subparameter is indicated by using an index value, the PHY layer module may determine, based on a mapping relationship, a first configuration status subparameter corresponding to a first index value. The mapping relationship is a correspondence between at least one index value and at least one configuration status subparameter.

Specifically, the mapping relationship may be stored in the storage module. After the PHY layer module reads the first index value from the storage module, the PHY layer module may search the storage module for the first configuration status subparameter corresponding to the first index value. In this way, the first subfield is carried in the first packet, and a corresponding first parameter is determined based on an index value indicated by using the first subfield, avoiding a case in which the first parameter is directly carried in a packet, and occupation of bandwidth between the central AP and the RRU is reduced.

For example, the mapping relationship may be regarded as a table, where the table includes a first index value and a first configuration status subparameter corresponding to the first index value, a second index value and a second configuration status subparameter corresponding to the second index value, a third index value and a third configuration status subparameter corresponding to the third index value, and the like. In this way, the PHY layer module can learn, by looking up the table, that a parameter corresponding to the first index value is the first configuration status subparameter.

Optionally, the index value is a MAC index value, and a corresponding parameter is a channel matrix parameter.

It should be understood that the index value and the corresponding parameter may alternatively be other information. The mapping relationship is stored in advance and the index values are exchanged, so that signaling overheads are reduced.

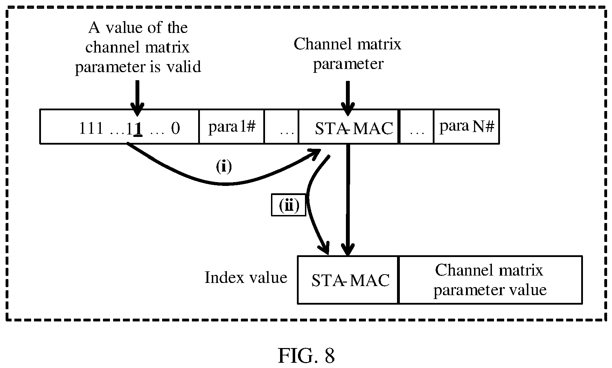

For example, as shown in FIG. 8, the underlined "1" indicates that a subfield indicating an STA-MAC index exists in the first field, and a corresponding channel matrix parameter value is obtained from the storage module based on the STA-MAC index.

Optionally, the central AP may also send, to the RRU, a sounding (sounding) packet used to measure air interface channel quality, and the RRU receives the sounding packet and forwards the sounding packet to the station. After measuring the channel quality, the station feeds back a response packet of the sounding packet to the RRU. Correspondingly, the PHY layer module of the RRU receives the response packet fed back by the station, where the response packet includes the mapping relationship. The PHY layer module stores the mapping relationship in the storage module, so that the RRU updates the mapping relationship stored in the storage module.

It should be noted that the central AP may send the sounding packet periodically or when a spatial channel needs to be measured again. This is not limited in this application.

504. The RRU sends a second packet to the station based on the packet transmission state, where the second packet includes data. Correspondingly, the station receives the second packet.

Specifically, the RRU sends, to the station based on the configured configuration state, the second packet that includes the data. In this embodiment of this application, the central AP generates the first packet, and the first field of the first packet is used to indicate the physical layer configuration status parameter for packet transmission, that is, the MAC layer functions are performed by the central AP. The RRU can configure the packet transmission state based on the first field, that is, implement the PHY layer functions. In other words, in this embodiment of this application, costs and power consumption of the RRU are reduced through interaction between a remote MAC layer module and a PHY layer module.

It should be noted that transmission between the RRU and the station is air interface transmission, that is, wireless network transmission.

Optionally, if the first packet includes the first field and the second field, the data included in the second packet may be the data carried in the second field.

It should be understood that, if the second field is not included in the first packet, the data in the second packet may be obtained by the RRU by using another packet, which is not limited in this application.

Therefore, according to the signal transmission method in this embodiment of this application, the RRU receives the first packet sent by the central AP, where the first field of the first packet is used to indicate the physical layer configuration status parameter for packet transmission. The RRU configures the packet transmission state based on the first field, and sends, to the station based on the packet transmission state, the second packet that includes the data. In this way, transferring of functions of the MAC layer to the central AP is implemented in this embodiment of this application, thereby reducing overheads of a CPU of the RRU, that is, reducing costs and power consumption of the RRU.

FIG. 9 is a schematic flowchart of a signal transmission method according to the claimed invention.

It should be understood that same terms in this embodiment of this application and the foregoing embodiments shown in FIG. 5 to FIG. 8 have same meanings, and are not described herein to avoid repetition.

901. A central AP sends a sounding packet to a station by using a PHY layer module in an RRU, where the sounding packet is used to detect quality of an air interface channel between the RRU and the station.

902. The station generates a response packet of the sounding packet based on a detection result, and sends the response packet to the PHY layer module of the RRU. The response packet also carries a mapping relationship indicating at least one parameter and at least one index value.

It should be understood that the PHY layer module may forward the response packet to the central AP.

It should also be understood that the response packet may also carry a MAC address of the station and a channel matrix parameter.

903. The PHY layer module copies the mapping relationship in the response packet and stores the mapping relationship in a storage module.

It should be noted that the steps 901 to 903 may be performed periodically or may be performed when a spatial channel needs to be measured again, or are performed when a physical layer configuration status parameter indicated by using a first field includes a channel matrix parameter. In addition, the steps 901 to 903 may alternatively be performed at any steps before step 907.

904. A MAC layer module of the central AP generates a first packet including the first field, where the first field indicates the physical layer configuration status parameter for packet transmission.

905. The MAC layer module of the central AP sends the first packet to the RRU.

906. The storage module in the RRU stores the first packet in the storage module.

907. The PHY layer module in the RRU reads the first packet from the storage module.

Optionally, if the physical layer configuration status parameter indicated by using the first field includes the channel matrix parameter, the first packet may include only a subfield indicating a MAC index value corresponding to the channel matrix parameter. In this way, the PHY module may search, based on a received first MAC index value, the storage module for a first channel matrix parameter corresponding to the first MAC index value.

908. The PHY layer module may store, in a corresponding register, content indicated by using the first field in the first packet, to complete configuration of a packet transmission state.

909. The PHY layer module sends a second packet to the station.

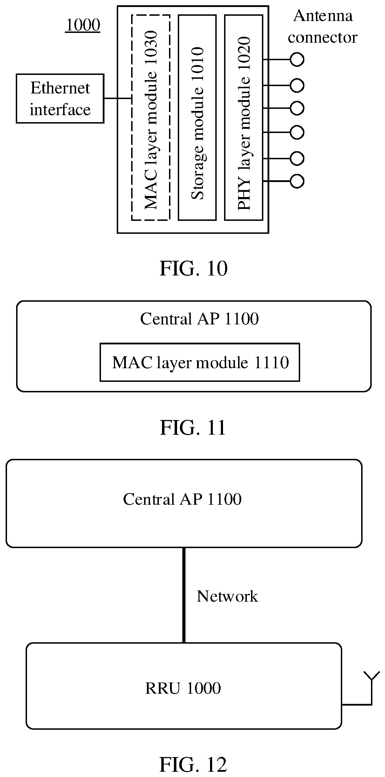

FIG. 10 is a schematic block diagram of an RRU 1000 according to an embodiment of this application.

It should be understood that same terms in this embodiment of this application and the foregoing embodiments shown in FIG. 5 to FIG. 9 have same meanings.

The RRU 1000 includes a processing module and a transceiver module.

The transceiver module is configured to receive a first packet sent by a central access point AP, where the first packet includes a first field, and the first field is used to indicate a physical layer configuration status parameter for packet transmission.

The processing module is configured to configure a packet transmission state based on the first field.

The transceiver module is further configured to send a second packet to a station based on the packet transmission state, where the second packet includes data.

Optionally, the physical layer configuration status parameter includes at least one of the following configuration status subparameters: a format for indicating an air interface packet, whether the air interface packet is a sounding frame, a transmission rate of the air interface packet, a modulation format of the air interface packet, a byte length of the air interface packet, an initialization value of a scrambler, a transmission energy level for transmission of the air interface packet, a preamble type of the air interface packet, a channel width for transmission of the air interface packet, channel offset for transmission of the air interface packet, a guard interval for transmission of the air interface packet, a quantity of extended spatial streams of the air interface packet, a quantity of transmission chains of the air interface packet, a channel matrix of the air interface packet, and an expansion matrix type of the air interface packet.

Optionally, the physical layer configuration status parameter is a primitive (TXVECTOR) parameter.

Optionally, the first packet further includes a second field, where the second field is used to carry the data.

Optionally, the first packet further includes a third field, where the third field is used to carry a packet end identifier. The transceiver module is further configured to receive end indication information.

Optionally, the first field carries a first index value, and the processing module is specifically configured to: determine, based on the first index value and a mapping relationship, a first configuration status subparameter corresponding to the first index value, where the mapping relationship is a mapping relationship between at least one index value and at least one configuration status subparameter; and configure the packet transmission state based on the first configuration status subparameter.

Optionally, the first index value is a medium access control MAC index value, and the configuration status subparameter is a channel matrix parameter.

In the claimed invention, the transceiver module is further configured to: receive a sounding packet, where the sounding packet is used to measure quality of an air interface channel; send the sounding packet to the station; and receive a response packet of the sounding packet, where the response packet includes the mapping relationship.

Optionally, the RRU further includes a storage module 1010, and the processing module is a physical PHY layer module 1020. The storage module is configured to buffer the first packet, and the PHY layer module is configured to obtain the first packet from the storage module.

Optionally, the first packet further includes a second field and a third field, where the second field is used to carry the data, and the third field is used to carry the packet end identifier. The first field, the second field and the third field are sequentially arranged in the first packet, and the first field, the second field, and the third field that are in the PHY layer module are sequentially obtained from the storage module.

Optionally, the first field includes a first subfield, where the first subfield is used to indicate an address of each configuration status subparameter of the physical layer configuration status parameter in a register in the PHY layer module. The PHY layer module 1020 is specifically configured to:
store each configuration status subparameter of the physical layer configuration status parameter in a corresponding register in the PHY layer module based on the first subfield.

Optionally, the first field further includes a second subfield, where the second subfield indicates a location of a subfield that is in the first field and that is used to indicate a configuration status subparameter of the physical layer configuration status parameter. The PHY layer module 1020 is specifically configured to:
obtain the configuration status subparameter of the physical layer configuration status parameter from the storage module based on the second subfield.

Optionally, the first packet further includes a packet header, and the packet header indicates a MAC address of the RRU.

Optionally, the RRU 1000 includes a MAC layer module 1030, where the MAC layer module 1030 is configured to process control information having a requirement that a latency is less than a preset time threshold. In other words, the RRU may process, in the RRU, data or a service that is sensitive to a processing latency requirement, to meet the latency requirement of the service or data.

Optionally, the preset time threshold may be 16 µs. In this case, when the latency requirement is greater than or equal to 16 µs, MAC layer functions are processed in a central AP. When the latency requirement is less than 16 µs, the MAC layer functions are processed in the RRU.

For example, a request to send (request to send, RTS), a clear to send (, CTS), an acknowledgement character (acknowledgement character, ACK), and the like may be performed in the RRU.

It should be understood that the preset time threshold may be 15 µs, 13 µs, or the like, which is not limited in this application.

Optionally, a memory of the storage module is less than a preset capacity threshold. To be specific, in a case that the RRU 1000 does not need to process the MAC layer functions or MAC layer functions of some services, only a storage module having a lower memory capacity may be set to reduce costs of the RRU.

Optionally, a value of the preset capacity threshold L may be any value within a range of 4 MB ≤ L ≤ 8 MB. For example, the preset capacity threshold may be 5 MB, 7 MB, or the like.

It should be noted that the storage module may be an external storage device, or may be integrated in the RRU. For example, the storage module is a small buffer (small buffer). This is not limited in this embodiment of this application.

Optionally, the RRU 1000 may further include at least one Ethernet interface, configured to communicate with the central AP, for example, the RRU may receive the first packet sent by the central AP through the Ethernet interface.

Optionally, the Ethernet interface may be a GE RJ 45, a GE SFP interface, or the like.

It should be noted that a PHY layer herein is used to perform functions of the 802.11 PHY layer.

Optionally, the RRU 1000 may further include at least one antenna connector, configured to communicate with the station.

FIG. 11 is a schematic block diagram of a central AP 1100 according to an embodiment of this application. The central AP 1100 includes a transceiver module and a processing module.

The processing module is configured to generate a packet, where the packet includes a first field, and the first field is used to indicate a physical layer configuration status parameter for packet transmission.

The transceiver module is configured to send the packet to a remote radio unit RRU.

Specifically, the processing module is configured to perform a function of a MAC layer module 1110. In other words, a MAC function of at least one RRU is transferred to the central AP 1100, and data after such processing is sent to the RRU through an Ethernet (Ethernet, ETH) interface, so that a light CPU (for example, the CPU is only responsible for configuration) or even no CPU is implemented in the RRU, thereby reducing complexity, power consumption, and costs of the RRU.

It should be noted that the processing module may be a CPU or a buffer (buffer).

Optionally, the central AP 1100 may further include a storage module. The processing module processes control information, and stores a processing result of the processing module in the storage module, and the MAC layer module 1110 reads the processing result from the storage module to generate a first packet.

Optionally, the storage module may be a DDR.

Optionally, a memory of the DDR may be 256 MB.

Optionally, the physical layer configuration status parameter includes at least one of the following configuration status subparameters: a format for indicating an air interface packet, whether the air interface packet is a sounding frame, a transmission rate of the air interface packet, a modulation format of the air interface packet, a byte length of the air interface packet, an initialization value of a scrambler, a transmission energy level for transmission of the air interface packet, a preamble type of the air interface packet, a channel width for transmission of the air interface packet, channel offset for transmission of the air interface packet, a guard interval for transmission of the air interface packet, a quantity of extended spatial streams of the air interface packet, a quantity of transmission chains of the air interface packet, a channel matrix of the air interface packet, and an expansion matrix type of the air interface packet.

Optionally, the physical layer configuration status parameter is a primitive (TXVECTOR) parameter.

Optionally, the packet further includes a second field, where the second field is used to carry data.

Optionally, the packet further includes a third field, where the third field is used to carry a packet end identifier. The transceiver module is further configured to receive end indication information.

Optionally, a first field, the second field, and the third field that are in the packet are sequentially arranged.

In the claimed invention, the first field carries a first index value, and the first index value corresponds to a first configuration status subparameter.

Optionally, the first index value is a medium access control MAC index value, and the first configuration status subparameter is a channel matrix parameter.

Optionally, the transceiver module is further configured to:
send a sounding packet to the RRU, where the sounding packet is used to measure quality of an air interface channel; and
receive a response packet of the sounding packet sent by the RRU, where the response packet includes a mapping relationship between at least one index value and at least one configuration status subparameter.

Optionally, the first field includes a first subfield, where the first subfield is used to indicate an address of each configuration status subparameter of the physical layer configuration status parameter in a register in a PHY layer module of the RRU.

Optionally, the first field includes a second subfield, where the second subfield indicates a location of a subfield that is in the first field and that is used to indicate at least one configuration status subparameter of the physical layer configuration status parameter.

Optionally, the processing module may be a MAC layer module 1110.

The MAC layer module 1110 is specifically configured to:
generate the first packet.

Optionally, the packet further includes a packet header, and the packet header indicates a MAC address of the RRU.

FIG. 12 is a schematic block diagram of a communications system 1200. As shown in FIG. 12, the communications system 1200 includes a central AP 1000 and at least one RRU 1100.

In this example, MAC layer functions are centralized on a cloud of the central AP, so that a statistical multiplexing capability of a MAC layer is improved and utilization of hardware resources is improved. In addition, when the MAC layer functions are centralized on the central AP, multi-RRU collaboration may be implemented, to implement complex scheduling from a perspective of an entire network, thereby improving Wi-Fi performance.

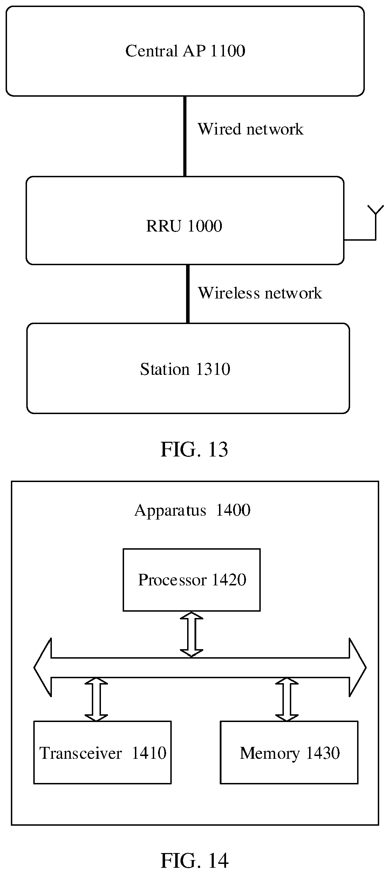

FIG. 13 is a schematic block diagram of a communications system 1300. As shown in FIG. 13, the communications system 1300 includes a central AP 1000, at least one RRU 1100 and a station 1310. The station 1310 may correspond to the station in FIG. 5 or FIG. 9.

FIG. 14 is a schematic structural diagram of a signal transmission apparatus 1400 according to an embodiment of this application. The apparatus 1400 includes a transceiver 1410 and a processor 1420. The processor 1420 may be configured to support an RRU or a central AP in performing corresponding functions in the foregoing methods, and the transceiver 1410 may be configured to support communication between the RRU and the central AP, to receive or transmit corresponding information or instructions in the foregoing methods. In an example, the processor 1420 may perform baseband processing and radio frequency processing on a signal, and the transceiver 1410, for example, an antenna, may receive and transmit the signal. For example, the processor may perform baseband processing and radio frequency processing on the signal to generate a measurement signal, and the measurement signal is sent out by using the antenna. In another example, the processor 1420 may generate a baseband signal, and the transceiver 1410 may include a radio frequency circuit, configured to perform radio frequency processing on the baseband signal. The radio frequency circuit may be configured to modulate a low-frequency baseband signal, to obtain a high-frequency carrier signal, and the high-frequency carrier signal is transmitted by using an antenna. The radio frequency circuit is also used to demodulate a high-frequency signal received by using the antenna, to obtain a low-frequency carrier signal. For example, the processor 1420 may generate a measurement signal, and then the transceiver 1410 performs processing (for example, analog conversion, filtering, amplification, and up-conversion) on the measurement signal, and sends a processed measurement signal to a the central AP. It may be understood that the transceiver 1410 may further perform processing (for example, filtering, amplification, down-conversion, or digitalization) on a received signal. For example, the transceiver 1410 performs processing, for example, filtering, amplification, down-conversion, or digitalization on a received the measurement signal.

Optionally, the apparatus 1400 may further includes a memory 1430. The memory 1430 may be configured to store indication information, and may further be configured to store code, instructions or the like executed by the processor 1420. The transceiver may include a radio frequency circuit. Optionally, the RRU further includes a storage unit.

The storage unit may be, for example, a memory. When the RRU includes the storage unit, the storage unit is configured to store computer executable instructions, the processing module is connected to the storage unit, and the processing module executes the computer executable instructions stored in the storage unit, to enable the RRU to perform the foregoing methods.

Optionally, if the apparatus 1400 is a chip within the RRU, the chip includes the processor 1420 and the transceiver 1410. The transceiver 1420 may be, for example, an input/output interface, a pin or a circuit on the chip. The processor 1410 may execute the computer executable instructions stored in the storage unit.

Optionally, the storage unit may be a storage unit in the chip, such as a register or a buffer, or the storage unit may be a storage unit in the RRU but outside the chip, such as a read-only memory (read-only memory, ROM), another type of static storage device capable of storing static information and instructions, or a random access memory (random access memory, RAM).

It should be understood that the processor 1420 in this embodiment of this application may be an integrated circuit chip having a signal processing capability. In an implementation process, various steps in the foregoing method embodiments may be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor can implement or perform the methods, the steps, and the logical block diagrams that are disclosed in the embodiments of this application. The general purpose processor may be a microprocessor, or the processor may be any conventional processor, or the like. The steps of the methods disclosed with reference to the embodiments of this application may be directly embodied as being executed by a hardware decoding processor, or executed by a combination of hardware of a decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods by combining hardware of the processor.

It may be understood that the memory 1430 in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus random access memory (direct rambus RAM, DR RAM). It should be noted that, the memories of the systems and methods described in this specification includes but are not limited to the foregoing and any other proper types of memories.

An embodiment of this application further provides a computer storage medium, and the computer storage medium may store a program instruction for indicating any one of the foregoing methods.

Optionally, the storage medium may be specifically the memory 1430.

An embodiment of this application further provides a chip system, where the chip system includes a processor, configured to support a distributed unit, a centralized unit, a central AP, and an RRU in implementing functions in the foregoing embodiments, for example, generating or processing data and/or information in the foregoing methods.

In a possible design, the chip system further includes a memory, and the memory is configured to store a program instruction and data necessary for a distributed unit, a centralized unit, a central AP, and an RRU. The chip system may include a chip, or include a chip and another discrete device.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that units and algorithm steps in the examples described with reference to the embodiments disclosed in this specification can be implemented by electrical hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. The scope of the application is defined by the appended claims.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A signal transmission method, comprising:
receiving (502, 905), by a remote radio unit, RRU, (1000), a first packet sent by a central access point, AP, (1100), wherein the first packet comprises a first field, and the first field is used to indicate a physical layer configuration status parameter for packet transmission;
configuring (503), by the RRU (1000), a packet transmission state based on the first field; and
sending (504, 909), by the RRU (1000), a second packet to a station (1310) based on the packet transmission state, wherein the second packet comprises data;
**characterized in that**
the first field carries a first index value, and the configuring, by the RRU (1000), a packet transmission state based on the first field comprises:
determining, by the RRU (1000) based on the first index value and a mapping relationship, a first configuration status subparameter corresponding to the first index value, wherein the mapping relationship is a mapping relationship between at least one index value and at least one configuration status subparameter; and
configuring, by the RRU (1000), the packet transmission state based on the first configuration status subparameter; and
wherein, before the determining a first configuration status subparameter corresponding to the first index value, the method further includes: receiving (901), by the RRU (1000), a sounding packet, where the sounding packet is used to measure air interface channel quality; sending (901), by the RRU (1000), the sounding packet to the station (1310); and receiving (902), by the RRU (1000), a response packet of the sounding packet, where the response packet includes the mapping relationship.

2. The method according to claim 1, wherein the physical layer configuration status parameter comprises at least one of the following configuration status subparameters: a format for indicating an air interface packet, whether the air interface packet is a sounding frame, a transmission rate of the air interface packet, a modulation format of the air interface packet, a byte length of the air interface packet, an initialization value of a scrambler, a transmission energy level for transmission of the air interface packet, a preamble type of the air interface packet, a channel width for transmission of the air interface packet, channel offset for transmission of the air interface packet, a guard interval for transmission of the air interface packet, a quantity of extended spatial streams of the air interface packet, a quantity of transmission chains of the air interface packet, a channel matrix of the air interface packet, and an expansion matrix type of the air interface packet.

3. The method according to claim 1 or 2, wherein the first packet further comprises a second field, and the second field is used to carry the data.

4. The method according to any one of claims 1 to 3, wherein the first packet further comprises a third field, the third field is used to carry a packet end identifier, and the method further comprises:
sending, by the RRU (1000), end indication information to the central AP (1100) based on the packet end identifier.

5. The method according to any one of claims 1 to 4, wherein the first field further comprises a first subfield, the first subfield is used to indicate an address of each configuration status subparameter of the physical layer configuration status parameter in a register in a PHY layer module of the RRU (1000), and the configuring, by the RRU (1000), a packet transmission state based on the first field comprises:
storing (908), by the RRU (1000), each configuration status subparameter of the physical layer configuration status parameter in a corresponding register in the PHY layer module based on the first subfield.

6. The method according to any one of claims 1 to 5, wherein the first field further comprises a second subfield, and the second subfield indicates a location of a subfield that is in the first field and that is used to indicate a configuration status subparameter of the physical layer configuration status parameter.

7. A remote radio unit, RRU, (1000), **characterized in that** the RRU (1000) is enabled to perform the method according to any one of claims 1 to 6.

8. A central access point, AP, (1100, 1400), comprising:
a processing module (1420), configured to generate a packet, wherein the packet comprises a first field, and the first field is used to indicate a physical layer configuration status parameter for packet transmission; and
a transceiver module (1410), configured to send the packet to a remote radio unit, RRU, (1000);
wherein the first field carries a first index value, and the first index value corresponds to a first configuration status subparameter; and
wherein the central AP (1100, 1400) is configured to send a sounding packet to the RRU (1000), where the sounding packet is used to measure air interface channel quality, and to receive a response packet of the sounding packet sent by the RRU (1000), where the response packet includes a mapping relationship between at least one index value and at least one configuration status subparameter.

9. The central AP (1100, 1400) according to claim 8, wherein the physical layer configuration status parameter comprises at least one of the following configuration status subparameters: a format for indicating an air interface packet, whether the air interface packet is a sounding frame, a transmission rate of the air interface packet, a modulation format of the air interface packet, a byte length of the air interface packet, an initialization value of a scrambler, a transmission energy level for transmission of the air interface packet, a preamble type of the air interface packet, a channel width for transmission of the air interface packet, channel offset for transmission of the air interface packet, a guard interval for transmission of the air interface packet, a quantity of extended spatial streams of the air interface packet, a quantity of transmission chains of the air interface packet, a channel matrix of the air interface packet, and an expansion matrix type of the air interface packet.

10. The central AP (1100, 1400) according to claim 8 or 9, wherein the packet further comprises a second field, and the second field is used to carry data.

11. The central AP (1100, 1400) according to any one of claims 8 to 10, wherein the packet further comprises a third field, and the third field is used to carry a packet end identifier, and the transceiver module (1410) is further configured to receive end indication information.

12. The central AP (1100, 1400) according to any one of claims 8 to 11, wherein the first field comprises a first subfield, the first subfield is used to indicate an address of each configuration status subparameter of the physical layer configuration status parameter in a register in a PHY layer module of the RRU (1000).

13. The central AP (1100, 1400) according to any one of claims 8 to 12, wherein the first field comprises a second subfield, and the second subfield indicates a location of a subfield that is in the first field and that is used to indicate at least one configuration status subparameter of the physical layer configuration status parameter.

## Patentansprüche

1. Signalübertragungsverfahren, umfassend:
Empfangen (502, 905) eines ersten Pakets, das durch einen zentralen Zugangspunkt (access point - AP) (1100) gesendet wurde, durch eine Remote Radio Unit (RRU) (1000), wobei das erste Paket ein erstes Feld umfasst und das erste Feld dazu verwendet wird, für die Paketübertragung einen Konfigurationsstatusparameter der physikalischen Schicht anzugeben;
Konfigurieren (503) eines Paketübertragungsstatus durch die RRU (1000) basierend auf dem ersten Feld; und
Senden (504, 909) eines zweiten Pakets an eine Station (1310) durch die RRU (1000) basierend auf dem Paketübertragungsstatus, wobei das zweite Paket Daten umfasst;
**dadurch gekennzeichnet, dass**
das erste Feld einen ersten Indexwert überträgt und das Konfigurieren eines Paketübertragungsstatus durch die RRU (1000) basierend auf dem ersten Feld umfasst:
Bestimmen eines ersten Konfigurationsstatusunterparameters, der dem ersten Indexwert entspricht, durch die RRU (1000) basierend auf dem ersten Indexwert und einer Zuordnungsbeziehung, wobei die Zuordnungsbeziehung eine Zuordnungsbeziehung zwischen zumindest einem Indexwert und zumindest einem Konfigurationsstatusunterparameter ist; und
Konfigurieren des Paketübertragungsstatus durch die RRU (1000) basierend auf dem ersten Konfigurationsstatusunterparameter; und
wobei das Verfahren vor dem Bestimmen eines ersten Konfigurationsstatusunterparameters, der dem ersten Indexwert entspricht, ferner umfasst: Empfangen (901) eines Sondierungspakets durch die RRU (1000), wobei das Sondierungspaket verwendet wird, um die Luftschnittstellenkanalqualität zu messen; Senden (901) des Sondierungspakets an die Station (1310) durch die RRU (1000); und Empfangen (902) eines Antwortpakets auf das Sondierungspaket durch die RRU (1000), wobei das Antwortpaket die Zuordnungsbeziehung beinhaltet.

2. Verfahren nach Anspruch 1, wobei der Konfigurationsstatusparameter der physikalischen Schicht mindestens einen aus den folgenden Konfigurationsstatusunterparametern umfasst: ein Format, um einem Luftschnittstellenpaket Folgendes anzugeben: ob es sich bei dem Luftschnittstellenpaket um einen Sondierungsrahmen handelt, eine Übertragungsrate des Luftschnittstellenpakets, ein Modulationsformat des Luftschnittstellenpakets, eine Bytelänge des Luftschnittstellenpakets, einen Initialisierungswert eines Scramblers, einen Übertragungsenergiepegel für die Übertragung des Luftschnittstellenpakets, einen Präambeltyp des Luftschnittstellenpakets, eine Kanalbreite für die Übertragung des Luftschnittstellenpakets, einen Kanalversatz für die Übertragung des Luftschnittstellenpakets, ein Schutzintervall für die Übertragung des Luftschnittstellenpakets, eine Menge der erweiterten Spatial Streams des Luftschnittstellenpakets, eine Menge von Übertragungsketten des Luftschnittstellenpakets, eine Kanalmatrix des Luftschnittstellenpakets und einen Erweiterungsmatrixtyp des Luftschnittstellenpakets.

3. Verfahren nach Anspruch 1 oder 2, wobei das erste Paket ferner ein zweites Feld umfasst und das zweite Feld zum Übertragen der Daten verwendet wird.

4. Verfahren nach einem der Ansprüche 1 bis 3, wobei das erste Paket ferner ein drittes Feld umfasst, das dritte Feld zum Übertragen einer Paketende-Kennung verwendet wird und das Verfahren ferner umfasst:
Senden von Endeangabeinformationen an den zentralen AP (1100) durch die RRU (1000) basierend auf der Paketende-Kennung.

5. Verfahren nach einem der Ansprüche 1 bis 4, wobei das erste Feld ferner ein erstes Unterfeld umfasst, das erste Unterfeld verwendet wird, um eine Adresse eines jeden Konfigurationsstatusunterparameters des Konfigurationsstatusparameters der physikalischen Schicht in einem Register in einem PHY-Schicht-Modul der RRU (1000) anzugeben, und das Konfigurieren eines Paketübertragungsstatus durch die RRU (1000) basierend auf dem ersten Feld umfasst:
Speichern (908) eines jeden Konfigurationsstatusunterparameters des Konfigurationsstatusparameters der physikalischen Schicht in einem entsprechenden Register in dem PHY-Schicht-Modul durch die RRU (1000) basierend auf dem ersten Unterfeld.

6. Verfahren nach einem der Ansprüche 1 bis 5, wobei das erste Feld ferner ein zweites Unterfeld umfasst und das zweite Unterfeld einen Ort eines Unterfelds angibt, das sich in dem ersten Feld befindet und das verwendet wird, um einen Konfigurationsstatusunterparameter des Konfigurationsstatusparameters der physikalischen Schicht anzugeben.

7. Remote Radio Unit, RRU, (1000), **dadurch gekennzeichnet, dass** die RRU (1000) befähigt ist, das Verfahren nach einem der Ansprüche 1 bis 6 durchzuführen.

8. Zentraler Zugangspunkt, AP, (1100, 1400), umfassend:
ein zum Erzeugen eines Pakets konfiguriertes Verarbeitungsmodul (1420), wobei das Paket ein erstes Feld umfasst und das erste Feld dazu verwendet wird, für die Paketübertragung einen Konfigurationsstatusparameter der physikalischen Schicht anzugeben; und
ein zum Senden des Pakets an eine Remote Radio Unit, RRU, (1000) konfiguriertes Transceivermodul (1410);
wobei das erste Feld einen ersten Indexwert überträgt und der erste Indexwert einem ersten Konfigurationsstatusunterparameter entspricht; und
wobei der zentrale AP (1100, 1400) dazu konfiguriert ist, ein Sondierungspaket an die RRU (1000) zu senden, wobei das Sondierungspaket verwendet wird, um die Luftschnittstellenkanalqualität zu messen, und ein Antwortpaket auf das durch die RRU gesendete Sondierungspakets zu empfangen (1000), wobei das Antwortpaket eine Zuordnungsbeziehung zwischen zumindest einem Indexwert und zumindest einem Konfigurationsstatusunterparameter enthält.

9. Zentraler AP (1100, 1400) nach Anspruch 8, wobei der Konfigurationsstatusparameter der physikalischen Schicht mindestens einen aus den folgenden Konfigurationsstatusunterparametern umfasst: ein Format, um einem Luftschnittstellenpaket Folgendes anzugeben: ob es sich bei dem Luftschnittstellenpaket um einen Sondierungsrahmen handelt, eine Übertragungsrate des Luftschnittstellenpakets, ein Modulationsformat des Luftschnittstellenpakets, eine Bytelänge des Luftschnittstellenpakets, einen Initialisierungswert eines Scramblers, einen Übertragungsenergiepegel für die Übertragung des Luftschnittstellenpakets, einen Präambeltyp des Luftschnittstellenpakets, eine Kanalbreite für die Übertragung des Luftschnittstellenpakets, einen Kanalversatz für die Übertragung des Luftschnittstellenpakets, ein Schutzintervall für die Übertragung des Luftschnittstellenpakets, eine Menge der erweiterten Spatial Streams des Luftschnittstellenpakets, eine Menge von Übertragungsketten des Luftschnittstellenpakets, eine Kanalmatrix des Luftschnittstellenpakets und einen Erweiterungsmatrixtyp des Luftschnittstellenpakets.

10. Zentraler AP (1100, 1400) nach Anspruch 8 oder 9, wobei das Paket ferner ein zweites Feld umfasst und das zweite Feld zum Übertragen von Daten verwendet wird.

11. Zentraler AP (1100, 1400) nach einem der Ansprüche 8 bis 10, wobei das Paket ferner ein drittes Feld umfasst und das dritte Feld zum Übertragen einer Paketende-Kennung verwendet wird, und das Transceivermodul (1410) ferner dazu konfiguriert ist, Endeangabeinformationen zu empfangen.

12. Zentraler AP (1100, 1400) nach einem der Ansprüche 8 bis 11, wobei das erste Feld ein erstes Unterfeld umfasst, das erste Unterfeld verwendet wird, um eine Adresse eines jeden Konfigurationsstatusunterparameters des Konfigurationsstatusparameters der physikalischen Schicht in einem Register in einem PHY-Schicht-Modul der RRU (1000) anzugeben.

13. Zentraler AP (1100, 1400) nach einem der Ansprüche 8 bis 12, wobei das erste Feld ein zweites Unterfeld umfasst und das zweite Unterfeld einen Ort eines Unterfelds angibt, das sich in dem ersten Feld befindet und das verwendet wird, um zumindest einen Konfigurationsstatusunterparameter des Konfigurationsstatusparameters der physikalischen Schicht anzugeben.

## Revendications

1. Procédé d'émission de signal, comprenant :
la réception (502, 905), par une unité radio distante, RRU, (1000), d'un premier paquet envoyé par un point d'accès central, AP, (1100), dans lequel le premier paquet comprend un premier champ, et le premier champ est utilisé pour indiquer un paramètre d'état de configuration de couche physique pour la transmission de paquets ;
la configuration (503), par la RRU (1000), d'un état de transmission de paquets sur la base du premier champ ; et
l'envoi (504, 909), par la RRU (1000), d'un second paquet à une station (1310) sur la base de l'état de transmission de paquets, dans lequel le second paquet comprend des données ;
**caractérisé en ce que**
le premier champ transporte une première valeur d'index, et la configuration, par la RRU (1000), d'un état de transmission de paquets sur la base du premier champ comprend :
la détermination, par la RRU (1000) sur la base de la première valeur d'index et d'une relation de mappage, d'un premier sous-paramètre d'état de configuration correspondant à la première valeur d'index, dans lequel la relation de mappage est une relation de mappage entre au moins une valeur d'index et au moins un sous-paramètre d'état de configuration ; et
la configuration, par la RRU (1000), de l'état de transmission de paquets sur la base du premier sous-paramètre d'état de configuration ; et
dans lequel, avant la détermination d'un premier sous-paramètre d'état de configuration correspondant à la première valeur d'index, le procédé comporte en outre : la réception (901), par la RRU (1000), d'un paquet de sondage, où le paquet de sondage est utilisé pour mesurer la qualité de canal d'interface radio ; l'envoi (901), par la RRU (1000), du paquet de sondage à la station (1310) ; et la réception (902), par la RRU (1000), d'un paquet de réponse du paquet de sondage, où le paquet de réponse comporte la relation de mappage.

2. Procédé selon la revendication 1, dans lequel le paramètre d'état de configuration de couche physique comprend au moins l'un des sous-paramètres d'état de configuration suivants : un format pour indiquer un paquet d'interface radio, si le paquet d'interface radio est une trame de sondage, un débit de transmission du paquet d'interface radio, un format de modulation du paquet d'interface radio, une longueur d'octet du paquet d'interface radio, une valeur d'initialisation d'un brouilleur, un niveau d'énergie de transmission pour la transmission du paquet d'interface radio, un type de préambule du paquet d'interface radio, une largeur de canal pour la transmission du paquet d'interface radio, un décalage de canal pour la transmission du paquet d'interface radio, un intervalle de garde pour la transmission du paquet d'interface radio, une quantité de flux spatiaux étendus du paquet d'interface radio, une quantité de chaînes de transmission du paquet d'interface radio, une matrice de canal du paquet d'interface radio et un type de matrice d'expansion du paquet d'interface radio.

3. Procédé selon la revendication 1 ou 2, dans lequel le premier paquet comprend en outre un deuxième champ, et le deuxième champ est utilisé pour transporter les données.

4. Procédé selon l'une quelconque des revendications 1 à 3, dans lequel le premier paquet comprend en outre un troisième champ, le troisième champ est utilisé pour transporter un identifiant de fin de paquet, et le procédé comprend en outre :
l'envoi, par la RRU (1000), d'informations d'indication de fin à l'AP central (1100) sur la base de l'identifiant de fin de paquet.

5. Procédé selon l'une quelconque des revendications 1 à 4, dans lequel le premier champ comprend en outre un premier sous-champ, le premier sous-champ est utilisé pour indiquer une adresse de chaque sous-paramètre d'état de configuration du paramètre d'état de configuration de couche physique dans un registre dans un module de couche PHY de la RRU (1000), et la configuration, par la RRU (1000), d'un état de transmission de paquets sur la base du premier champ comprend :
le stockage (908), par la RRU (1000), de chaque sous-paramètre d'état de configuration du paramètre d'état de configuration de couche physique dans un registre correspondant dans le module de couche PHY sur la base du premier sous-champ.

6. Procédé selon l'une quelconque des revendications 1 à 5, dans lequel le premier champ comprend en outre un second sous-champ, et le second sous-champ indique un emplacement d'un sous-champ qui se trouve dans le premier champ et qui est utilisé pour indiquer un sous-paramètre d'état de configuration du paramètre d'état de configuration de couche physique.

7. Unité radio distante, RRU, (1000), **caractérisée en ce que** la RRU (1000) est activée pour exécuter le procédé selon l'une quelconque des revendications 1 à 6.

8. Point d'accès central, AP, (1100, 1400), comprenant :
un module de traitement (1420), configuré pour générer un paquet, dans lequel le paquet comprend un premier champ, et le premier champ est utilisé pour indiquer un paramètre d'état de configuration de couche physique pour la transmission de paquets ; et
un module émetteur-récepteur (1410), configuré pour envoyer le paquet à une unité radio distante, RRU, (1000) ;
dans lequel le premier champ porte une première valeur d'index, et la première valeur d'index correspond à un premier sous-paramètre d'état de configuration ; et
dans lequel l'AP central (1100, 1400) est configuré pour envoyer un paquet de sondage à la RRU (1000), où le paquet de sondage est utilisé pour mesurer la qualité de canal d'interface radio, et pour recevoir un paquet de réponse du paquet de sondage envoyé par la RRU (1000), où le paquet de réponse comporte une relation de mappage entre au moins une valeur d'index et au moins un sous-paramètre d'état de configuration.

9. AP central (1100, 1400) selon la revendication 8, dans lequel le paramètre d'état de configuration de couche physique comprend au moins l'un des sous-paramètres d'état de configuration suivants : un format pour indiquer un paquet d'interface radio, si le paquet d'interface radio est une trame de sondage, un débit de transmission du paquet d'interface radio, un format de modulation du paquet d'interface radio, une longueur d'octet du paquet d'interface radio, une valeur d'initialisation d'un brouilleur, un niveau d'énergie de transmission pour la transmission du paquet d'interface radio, un type de préambule du paquet d'interface radio, une largeur de canal pour la transmission du paquet d'interface radio, un décalage de canal pour la transmission du paquet d'interface radio, un intervalle de garde pour la transmission du paquet d'interface radio, une quantité de flux spatiaux étendus du paquet d'interface radio, une quantité de chaînes de transmission du paquet d'interface radio, une matrice de canal du paquet d'interface radio et un type de matrice d'expansion du paquet d'interface radio.

10. AP central (1100, 1400) selon la revendication 8 ou 9, dans lequel le paquet comprend en outre un deuxième champ, et le deuxième champ est utilisé pour transporter des données.

11. AP central (1100, 1400) selon l'une quelconque des revendications 8 à 10, dans lequel le paquet comprend en outre un troisième champ, et le troisième champ est utilisé pour transporter un identifiant de fin de paquet, et le module émetteur-récepteur (1410) est en outre configuré pour recevoir des informations d'indication de fin.

12. AP central (1100, 1400) selon l'une quelconque des revendications 8 à 11, dans lequel le premier champ comprend un premier sous-champ, le premier sous-champ est utilisé pour indiquer une adresse de chaque sous-paramètre d'état de configuration du paramètre d'état de configuration de couche physique dans un registre dans un module de couche PHY de la RRU (1000).

13. AP central (1100, 1400) selon l'une quelconque des revendications 8 à 12, dans lequel le premier champ comprend un second sous-champ, et le second sous-champ indique un emplacement d'un sous-champ qui se trouve dans le premier champ et qui est utilisé pour indiquer au moins un sous-paramètre d'état de configuration du paramètre d'état de configuration de couche physique.
